# EUROPÄISCHE PATENTSCHRIFT

(11) **EP 2 744 837 B1**
(45) Veröffentlichungstag und Bekanntmachung des Hinweises auf die Patenterteilung: **01.06.2016**
(21) Anmeldenummer: 12745878.4
(22) Anmeldetag: 14.08.2012
(51) Int. Cl.: C08F 220/04, C08F 220/08, C08F 251/00, C08K 5/17

(54) **VERFAHREN ZUR HERSTELLUNG EINES WÄSSRIGEN BINDEMITTELSYSTEMS**
METHOD FOR PRODUCING AN AQUEOUS BINDER SYSTEM
PROCÉDÉ DE PRÉPARATION D'UN SYSTÈME DE LIANT AQUEUX

(30) Priorität: 18.08.2011 EP 11177987
(43) Veröffentlichungstag der Anmeldung: 25.06.2014
(73) Patentinhaber: BASF SE, 67056 Ludwigshafen am Rhein (DE)
(72) Erfinder: MICHL, Kathrin, 67063 Ludwigshafen (DE); SMIT, Theo, 69117 Heidelberg (DE); SCHILLING, Holger, 69488 Birkenau (DE)
(74) Vertreter: BASF IP Association
(86) Internationale Anmeldenummer: PCT/EP2012/065857
(87) Internationale Veröffentlichungsnummer: WO 2013/024084

(56) Entgegenhaltungen:
- WO-A1-2008/152018
- DE-A1- 19 606 392
- DE-A1- 19 606 393

## Beschreibung

Gegenstand der vorliegenden Erfindung ist ein Verfahren zur Herstellung eines wässrigen Bindemittelsystems, welches dadurch gekennzeichnet ist, dass in einer ersten Verfahrensstufe

| | |
|---|---|
| ≥ 50 und ≤ 100 Gew.-Teile | wenigstens einer α,β-monoethylenisch ungesättigten Mono- oder Dicarbonsäure und/oder deren Anhydrid (Monomer A1), und |
| ≥ 0 und ≤ 50 Gew.-Teile | wenigstens einer anderen ethylenisch ungesättigten Verbindung, welche mit den Monomeren A1 copolymerisierbar ist (Monomer A2), |

wobei sich die Gesamtmengen der Monomeren A1 und A2 zu 100 Gew.-Teilen addieren [Gesamtmonomerenmenge], in einem wässrigen Medium in Anwesenheit von ≥ 0,1 und ≤ 150 Gew.-%, bezogen auf die Gesamtmonomerenmenge, wenigstens einer Saccharidverbindung B radikalisch polymerisiert werden und daran anschließend in einer zweiten Verfahrensstufe dem in der ersten Verfahrensstufe erhaltenen Polymerisationsgemisch ≥ 0,1 und ≤ 70 Gew.-%, bezogen auf die Gesamtmonomerenmenge, wenigstens eines Alkanolamins mit wenigstens zwei Hydroxygruppen (Alkanolamin C) zugesetzt wird, wobei die Sachcharidverbindung B ein gewichtsmittleres Molekulargewicht ≥ 3000 und ≤ 10000 g/mol aufweist und wobei die Gesamtmenge an Saccharidverbindung B ≥ 30 und ≤ 100 Gew.-% bezogen auf die Gesamtmonomerenmenge, beträgt.

Gegenstand der vorliegenden Erfindung sind ferner die nach erfindungsgemäßen Verfahren zugänglichen wässrigen Bindemittelsysteme, deren unterschiedliche Verwendungen, ein Verfahren zur Herstellung von Formkörpern unter Verwendung des wässrigen Bindemittelsystems sowie die erhaltenen Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A 445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A 583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β-Hydroxyalkylamide genannt.

Die EP-A 651088 beschreibt entsprechende Bindemittel für Substrate aus Cellulosefaser. Diese Bindemittel enthalten zwingend einen phosphorhaltigen Reaktionsbeschleuniger.

Die EP-A 672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A 2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

In der US-A 2004/82689 werden formaldehydfreie wässrige Bindemittel zur Herstellung von Faservliesen, insbesondere Glasfaservliesen, offenbart, welche essentiell aus einer polymeren Polycarbonsäure, einem Polyol und einem Imidazolin-Derivat bestehen. Die erhaltenen gebundenen Faservliese sollen eine reduzierte Wasseraufnahme aufweisen. Es werden unspezifisch sowohl stickstoffhaltige als auch stickstofffreie Polyole offenbart, wobei jedoch insbesondere das stickstoffhaltige Triethanolamin als bevorzugt beschrieben wird. Als spezifische Imidazolin-Derivate werden Umsetzungsprodukte aus einer Fettsäure mit Aminoethylethanolamin oder Diethylentriamin genannt. Die offenbarten wässrigen Bindemittelzusammensetzungen enthalten einen phosphorhaltigen Reaktionsbeschleuniger.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer α,β-ethylenisch ungesättigten Mono- oder Dicarbonsäure in einpolymerisierter Form enthält.

Des Weiteren offenbart die WO10/34645 wässrige Bindemittelsysteme für körnige und/oder faserförmige Substrate, welche als wirksame Bestandteile ein Polymerisat 1, enthaltend ≥ 5,5 Gew.-% und ≤ 20 Gew.-% einer α,β-ethylenisch ungesättigten Mono- oder Dicarbonsäure in einpolymerisierter Form, ein Polymerisat 2, enthaltend ≥ 40 Gew.-% einer α,β-ethylenisch ungesättigten Mono- oder Dicarbonsäure in einpolymerisierter Form und eine Polyolverbindung mit wenigstens zwei Hydroxylgruppen.

In einer prioritätsbegründenden und nicht vorveröffentlichten europäischen Patentanmeldung mit Anmeldenummer 11154347.6 werden wässrige Bindemittel für körnige und/oder faserförmige Substrate offenbart, welche neben einem carbonsäuregruppenhaltigen Polymerisat und einer Polyolverbindung essentiell eine Salzverbindung enthalten. Diese salzhaltigen Bindemittelflotten wirken sich vorteilhaft auf die Nassreißkraft sowie die Reißkraft bei 180 °C der damit gebundenen Faservliese aus.

Ebenfalls in einer prioritätsbegründenden und nicht vorveröffentlichten europäischen Patentanmeldung mit Anmeldenummer 11159420.6 werden wässrige Bindemittel für körnige und/oder faserförmige Substrate offenbart, welche neben einem carbonsäuregruppenhaltigen Polymerisat und einer stickstofffreien Polyolverbindung essentiell eine hydroxygruppenfreie organische Stickstoffverbindung mit einem pK_{B}-Wert ≤ 7 enthalten. Die Verwendung dieser Bindemittelflotten wirkt sich vorteilhaft auf die Nassreißkraft sowie die Farbbeständigkeit der damit gebundenen Faservliese aus.

Bei der Verwendung der vorgenannten Bindemittelsysteme werden vorteilhafte Eigenschaften der damit gebundenen Substrate, insbesondere Faservliese, erzielt. Allerdings werden vom Markt zunehmend kostengünstigere Bindemittelsysteme bzw. Bindemittelsysteme, welche unter Verwendung von nachwachsenden Rohstoffen hergestellt werden, gefordert. Dabei ist der Marktdruck nach kostengünstigeren Bindemittelsystemen bzw. Bindemittelsystemen, welche unter Verwendung von nachwachsenden Rohstoffen hergestellt werden, so stark ausgeprägt, dass selbst etwas abgeschwächte Eigenschaften der mit diesen Bindemitteln gebundenen Substrate toleriert werden.

Bei polysaccharidhaltigen wässrigen Bindemittelzusammensetzungen ist von folgendem Stand der Technik auszugehen.

In der EP-A 649 870 werden Gemische aus Polycarbonsäuren und Saccharidverbindungen im Gewichtsverhältnis von 95:5 bis 20:80 zur Herstellung von Polymerfilmen mit Gassperrwirkung offenbart.

Die EP-A 911 361 offenbart wässrige Bindemittelsysteme für körnige und/oder faserförmige Substrate, welche ein Polycarboxypolymer mit einem gewichtsmittleren Molekulargewicht von wenigstens 1000 g/mol und ein Polysaccharid mit einem gewichtsmittleren Molekulargewicht von wenigstens 10000 g/mol, enthält, wobei deren Mengen so bemessen sind, dass das Äquivalenzverhältnis von Carboxylgruppen zu Hydroxylgruppen 3:1 bis 1:20 beträgt.

Desweiteren offenbart die EP-A 1 578 879 wässrige Bindemittelzusammensetzungen zum Beschichten von Glasfasern, umfassend ein Polycarboxypolymer, ein Polyalkohol mit wenigstens zwei Hydroxygruppen sowie ein sogenanntes wasserlösliches Streckungsmittel, wobei als wasserlösliches Streckungsmittel insbesondere Polysaccharide mit einem mittleren Molekulargewicht kleiner 10000 g/mol vorgeschlagen werden.

Die WO 2008/150647 offenbart wässrige Bindemittelsysteme zur Herstellung von Fasermatten, umfassend ein Harnstoff/Formaldehyd-Harz und eine wässrige Copolymerisatdispersion, deren Copolymerisat im Wesentlichen aufgebaut ist aus Styrol, Alkylacrylaten bzw. -methacrylaten, Acrylnitril und ein gegebenenfalls substituiertes Acrylamid. Optional kann die wässrige Copolymerisatdispersion noch Stärke enthalten.

In der US-A 2005/215153 werden wässrige Bindemittelsysteme für Glasfasern offenbart, welche aus einer sogenannten "pre-binder composition", enthaltend eine Polycarboxypolymer und einen Vernetzer, bestehen, welcher ein Dextrin bzw. ein entsprechendes Dextrinderivat zugemischt wird.

Auch die US-A 2009/170978 offenbart wässrige Bindemittelsysteme für Faservliese, umfassend eine wässrige Copolymerisatdispersion, deren Copolymerisat zwischen 5 und 40 Gew.-% wenigstens eines carbonsäuregruppenhaltigen Monomeren in einpolymerisierter Form enthält und eine natürlichen Bindemittelkomponente, ausgewählt aus der Gruppe umfassend Polysaccharide, Pflanzenproteine, Lignine und/oder Ligninsulfonate.

Nachteilig an den Bindemittelsystemen des Standes der Technik ist, dass sie bei der Herstellung von Formkörpern aus körnigen und/oder faserförmigen Substraten, insbesondere im Hinblick auf deren mechanischen Eigenschaften nicht immer voll zu befriedigen vermögen.

Aufgabe der vorliegenden Erfindung war es daher, wässrige Bindemittelzusammensetzungen zur Verfügung zu stellen, durch welche die Nachteile der wässrigen Bindemittelzusammensetzungen des Standes der Technik überwunden und durch welche Formkörper mit verbesserter Reiß- bzw. Nassreißfestigkeit zugänglich gemacht werden können.

Die Aufgabe wurde durch ein wässriges Bindemittelsystem gelöst, welches durch das eingangs definierte Verfahren zugänglich ist.

Erfindungsgemäß werden in der ersten Verfahrensstufe ≥ 50 und ≤ 100 Gew.-Teile, vorteilhaft ≥ 85 und ≤ 100 Gew.-Teile und insbesondere vorteilhaft 100 Gew.-Teile wenigstens eines Monomeren A1 und ≥ 0 und ≤ 50 Gew.-Teile, vorteilhaft ≥ 0 und ≤ 15 Gew.-Teile und insbesondere vorteilhaft 0 Gew.-Teile wenigstens eines Monomer A2, wobei sich die Gesamtmengen der Monomeren A1 und A2 zu 100 Gew.-Teilen addieren [Gesamtmonomerenmenge], in einem wässrigen Medium in Anwesenheit wenigstens einer Saccharidverbindung B radikalisch polymerisiert.

Bei den Monomeren A1 handelt es sich um α,β-monoethylenisch ungesättigte, insbesondere C₃-bis C₆-, bevorzugt C₃- oder C₄-Mono- oder Dicarbonsäuren sowie deren voll- oder teilneutralisierten wasserlöslichen Salze, insbesondere deren Alkalimetall- oder Ammoniumsalze. Genannt seien beispielsweise Acrylsäure, Methacrylsäure, Ethylacrylsäure, Itaconsäure, Al-lylessigsäure, Crotonsäure, Vinylessigsäure, Fumarsäure, Maleinsäure, 2-Methylmaleinsäure, aber auch Halbester von ethylenisch ungesättigten Dicarbonsäuren, wie Maleinsäuremonoalkylester von C₁-bis C₈-Alkoholen sowie die Ammonium-, Natrium- oder Kaliumsalze der vorgenannten Säuren. Die Monomeren A1 umfassen aber auch die Anhydride entsprechender α,β-monoethy-lenisch ungesättigter Dicarbonsäuren, wie beispielsweise Maleinsäureanhydrid oder 2-Methyl-maleinsäureanhydrid. Bevorzugt ist das Monomer A1 ausgewählt aus der Gruppe umfassend Acrylsäure, Methacrylsäure, Crotonsäure, Fumarsäure, Maleinsäure, Maleinsäureanhydrid,
2-Methylmaleinsäure und Itaconsäure. Mit besonderem Vorteil werden erfindungsgemäß als Monomere A1 jedoch Acrylsäure, Methacrylsäure, Maleinsäure, Maleinsäureanhydrid und/oder Itaconsäure eingesetzt.

Als Monomere A2 kommen alle ethylenisch ungesättigten Monomere in Betracht, welche sich von den Monomeren A1 unterscheiden und mit diesen copolymerisierbar sind. Als Monomere A2 beispielhaft genannt seien vinylaromatische Verbindungen, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18C-Atome, bevorzugt 2 bis 12C-Atome aufweisenden Monocarbonsäuren, wie Vinylacetat, Vinylpropionat, Vinyl-n-butyrat, Vinyllaurat und Vinylstearat, C₁- bis C₁₂-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, - octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren in Betracht. Die vorgenannten Monomere bilden in der Regel ≥ 50 Gew.-%, bevorzugt ≥ 80 Gew.-% und insbesondere bevorzugt ≥ 90 Gew.-% der Gesamtmenge aller Monomeren A2 und stellen somit die Hauptmonomeren A2 dar. Erfindungsgemäß bevorzugt enthält das Polymerisat A als Hauptmonomer A2 einen Ester der Acrylsäure oder Methacrylsäure mit einem C₁-bis C₁₂-Alkohol, insbesondere Methylacrylat, Ethylacrylat, n-Butylacrylat , 2-Ethylhexylacrylat oder Methylmethacrylat, eine vinylaromatische Verbindung, insbesondere Styrol, ein Nitril einer α,β-monoethylenisch ungesättigten Carbonsäure, insbesondere Acrylnitril und/oder einen Vinylester einer C₂-bis C₁₂-Monocarbonsäure in einpolymerisierter Form.

Weiterhin kommen als Monomere A2 im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acryl-amido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Di-ethylamino)ethylmethacrylat, 2-(N-tert.-Butylamino)ethylmethacrylat, N-(3-N',N'-Dimethylamino-propyl)methacrylamid und 2-(1Imidazolin-2-onyl)ethylmethacrylat. Die vorgenannten Monomere A2 werden in der Regel in Mengen ≤ 10 Gew.-%, bevorzugt ≤ 8 Gew.-% und insbesondere ≤ 5 Gew.-%, jeweils bezogen auf die Gesamtmenge an Monomeren A2, eingesetzt. Als bevorzugtes Monomer wird Acrylamid und/oder Methacrylamid in einer Menge von ≥ 0,5 und ≤ 4 Gew.-%, bezogen auf die Gesamtmenge an Monomeren A2 eingesetzt.

Monomere A2, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die DiEster zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere A2 werden in der Regel in Mengen ≤ 10 Gew.-%, bevorzugt ≤ 5 Gew.-% und insbesondere ≤ 2 Gew.-%, jeweils bezogen auf die Gesamtmenge an Monomeren A2, eingesetzt.
Als Monomer A2 bevorzugt werden jedoch Methylacrylat, Ethylacrylat, n-Butylacrylat, 2-Ethylhexylacrylat, Methylmethacrylat und/oder Styrol eigesetzt.

Bevorzugt werden zur Polymerisation ≥ 85 und ≤ 100 Gew.-% wenigstens eines Monomeren A1, und ≥ 0 und ≤ 15 Gew.-% wenigstens eines Monomeren A2 eingesetzt. Mit besonderem Vorteil werden zur Polymerisation ≥ 85 und ≤ 100 Gew.-% Acrylsäure, Methacrylsäure, Maleinsäure, Maleinsäureanhydrid und/oder Itaconsäure, insbesondere vorteilhaft Acrylsäure sowie Acrylsäure und Maleinsäureanhydrid und ≥ 0 und ≤ 15 Gew.-% Methylacrylat, Ethylacrylat, n-Butylacrylat, 2-Ethylhexylacrylat, Methylmethacrylat und/oder Styrol eingesetzt.

Insbesondere vorteilhaft werden jedoch zur Polymerisation ausschließlich Monomere A1 eingesetzt, wobei Acrylsäure, Methacrylsäure, Maleinsäure, Maleinsäureanhydrid und/oder Itaconsäure bevorzugt und Acrylsäure bzw. Gemische aus Acrylsäure und Maleinsäureanhydrid besonders bevorzugt sind.

Essentiell für das erfindungsgemäße Verfahren ist, dass die radikalische Polymerisation der Monomeren A1 und A2 in einem wässrigen Medium in Anwesenheit wenigstens einer Saccharidverbindung B erfolgt.

Im Rahmen dieser Schrift werden unter einer Saccharidverbindung B dem Fachmann geläufige Polysaccharide sowie Substitutionsprodukte und Derivate der vorgenannten Verbindungen verstanden.

Saccharidverbindungen, welche aus mehr als zehn Monosaccharidstruktureinheiten aufgebaut sind, werden im Rahmen dieser Schrift als Polysaccharidverbindungen bezeichnet. Dabei können die Polysaccharidverbindungen aus den Strukturelementen eines Monosaccharids (sogenannte Homoglycane) oder den Strukturelementen von zwei oder mehreren verschiedenen Monosacchariden (sogenannte Heteroglycane) aufgebaut sein. Erfindungsgemäß bevorzugt werden Homoglycane eingesetzt.

Unter den Homoglycanen sind die Stärken, welche aus α-D-Glucoseeinheiten aufgebaut sind, insbesondere bevorzugt. Die Stärken bestehen aus den Polysacchariden Amylose (D-Glucoseeinheiten, welche α-1,4-glycosidisch miteinander verbunden sind) und Amylopektin (D-Glucoseeinheiten, welche α-1,4- und zusätzlich zu ca. 4 % α-1,6-glycosidisch miteinander verbunden sind). Üblicherweise enthält natürlich vorkommende Stärke ca. 20 bis 30 Gew.-% Amylose und ca. 70 bis 80 Gew.-% Amylopektin. Durch Züchtung und variierend nach Pflanzenart kann das Verhältnis zwischen Amylose und Amylopektin aber verändert sein. Als Stärken eignen sich alle nativen Stärken, wie beispielsweise Stärken aus Mais, Weizen, Hafer, Gerste, Reis, Hirse, Kartoffeln, Erbsen, Tapioka, Sorghum oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken beträgt ≥ 90 Gew.-%, oft ≥ 95 und ≤ 100 Gew.-%.

Selbstverständlich umfasst der Begriff Saccharidverbindung B auch die Substitutionsprodukte und Derivate der vorgenannten Polysaccharidverbindungen.

Dabei versteht man unter den Substitutionsprodukten einer Saccharidverbindung B solche, bei denen wenigstens eine Hydroxygruppe der Saccharidverbindung B unter Aufrechterhaltung der Saccharidstruktur funktionalisiert wurde, beispielsweise durch Veresterung, Veretherung, Oxidation etc. Dabei erfolgt die Veresterung beispielsweise durch Umsetzung der Saccharidverbindung B mit anorganischen oder organischen Säuren, deren Anhydriden oder Halogeniden. Von besonderem Interesse sind phosphatierte und acetylierte Saccharidverbindungen. Die Veretherung erfolgt in der Regel durch Umsetzung der Saccharidverbindungen mit organischen Halogenverbindungen, Epoxiden oder Sulfaten in wässriger alkalischer Lösung. Bekannte Ether sind Alkylether, Hydroxyalkylether, Carboxyalkylether und Allylether. Die Oxidation wenigstens einer Hydroxygruppe mittels eines in der organischen Kohlehydratchemie üblichen Oxidationsmittels, wie beispielsweise Salpetersäure, Wasserstoffperoxid, Ammoniumpersulfat, Peroxyessigsäure, Natriumhypochlorit und/oder 2,2,6,6-Tetramethyl-1-piperidinyloxy (TEMPO) entsteht die entsprechende Ketoverbindung (bei Oxidation einer sekundären Hydroxygruppe), bzw. Carboxylverbindung (bei Oxidation einer primären Hydroxygruppe).

Unter Derivaten von Saccharidverbindungen B werden solche Reaktionsprodukte von Polysacchariden verstanden, welche unter Spaltung wenigstens einer Acetal- bzw. Ketal-gruppe (d.h. wenigstens einer glycosidischen Bindung) und daher unter Abbau der ursprünglichen Saccharidstruktur erhalten werden. Solche Abbaureaktionen sind dem Fachmann geläufig und erfolgen insbesondere dadurch, dass man eine Oligo- oder Polysaccharidverbindung thermischen, microbiellen, enzymatischen, oxidativen und/oder hydrolytischen Bedingungen aussetzt.

Mit Vorteil werden als Saccharidverbindungen B Stärke, Cellulose, Guaran, Xanthan, Alginat, Pectin, Chitosan, Gummi Arabicum, Carrageen, Agar, Gellan sowie deren Derivate und/oder Substitutionsprodukte eingesetzt.

Mit besonderem Vorteil wird jedoch Stärke sowie deren Derivate und/oder Substitutionsprodukte eingesetzt, wobei Maltodextrin und/oder Glucosesirup, bzw. hydrolytisch abgebaute Stärken besonders bevorzugt sind.

Die Saccharidverbindungen B weisen ein gewichtsmittleres Molekulargewicht im Bereich ≥ 3000 und ≤ 10000 g/mol oder ≥ 3000 und ≤ 8000 g/mol auf. Dabei erfolgt die Bestimmung des gewichtsmittleren Molekulargewichts mittels der dem Fachmann geläufigen Gelpermeationschromatographie mit definierten Standards.

Eine in der betrieblichen Praxis sehr geläufige Größe zur Charakterisierung des Abbaugrades von Stärken ist der DE-Wert. Dabei steht DE für Dextrose Equivalent und bezeichnet den prozentualen Anteil reduzierender Zucker an der Trockensubstanz. Der DE-Wert entspricht daher der Menge an Glucose (= Dextrose) in Gramm, die je 100 g Trockensubstanz das gleiche Reduktionsvermögen hätte. Der DE-Wert ist ein Maß dafür, wie weit der Polymerabbau erfolgt ist. Daher erhalten Stärken mit niedrigem DE-Wert einen hohen Anteil an Polysacchariden und einen niedrigen Gehalt an niedermolekularen Mono- und Oligosacchariden, während Stärken mit hohem DE-Wert hauptsächlich aus niedermolekularen Mono- oder Disacchariden bestehen. Ein im Rahmen der vorliegenden Erfindung bevorzugter Glucosesirup weist DE-Werte von 20 bis 30 und gewichtsmittlere Molekulargewichte im Bereich von 3000 bis 6000 g/mol auf. Herstellungsbedingt fallen diese Produkte in Form wässriger Lösungen an und werden daher in der Regel auch als solche in den Handel gebracht. Geeignete Lösungen von Glucosesirup weisen Feststoffgehalte von 70 bis 95 Gew.-% auf.

Bevorzugt ist, wenn die erfindungsgemäß verwendeten Saccharidverbindungen B eine Löslichkeit von ≥ 10 g, vorteilhaft ≥ 50 g und insbesondere vorteilhaft ≥ 100 g pro Liter entionisiertem Wasser bei 20 °C und Atmosphärendruck [1 atm = 1,013 bar (absolut)] aufweisen. Erfindungsgemäß sollen jedoch auch Ausführungsformen mit umfasst sein, deren Saccharidverbindungen B eine Löslichkeit < 10 g pro Liter entionisiertem Wasser bei 20 °C und Atmosphärendruck aufweisen. Abhängig von der Menge dieser eingesetzten Saccharidverbindungen B, können diese dann auch in Form ihrer wässrigen Suspension vorliegen. Werden erfindungsgemäß Saccharidverbindungen B in Art und Menge so eingesetzt, dass sie in wässriger Suspension vorliegen, so ist es vorteilhaft, wenn die in wässrigem Medium suspendierten Partikel der Saccharidverbindung B einen mittleren Teilchendurchmesser ≤ 5 µm, bevorzugt ≤ 3 µm und insbesondere bevorzugt ≤ 1 µm aufweisen. Die Bestimmung der mittleren Teilchendurchmesser erfolgt über die Methode der quasielastischen Lichtstreuung (ISO-Norm 13 321).

Erfindungswesentlich ist, dass wenigstens eine Teilmenge der wenigstens einen Saccharidverbindung B vor Initiierung der Polymerisationsreaktion im wässrigen Medium vorgelegt und die gegebenenfalls verbliebene Teilmenge der wenigstens einen Saccharidverbindung B während der Polymerisationsreaktion diskontinuierlich in einer oder mehreren Portionen oder kontinuierlich mit sich verändernden oder gleichbleibenden Mengenströmen zugegeben werden. Mit Vorteil werden ≥ 50 Gew.-%, mit besonderem Vorteil ≥ 90 Gew.-% der Gesamtmenge und insbesondere vorteilhaft die Gesamtmenge der wenigstens einen Saccharidverbindung B im wässrigen Medium vorgelegt.

Erfindungsgemäß beträgt die Menge an Saccharidverbindung B ≥ 30 und ≤ 100 Gew.-% und vorteilhaft ≥ 40 und ≤ 70 Gew.-%, jeweils bezogen auf die Gesamtmonomerenmenge.

Die radikalische Polymerisation der Monomeren A1 und A2 ist dem Fachmann geläufig und erfolgt insbesondere nach der Methode der radikalischen Emulsions-, Lösungs- oder Suspensionspolymerisation. Bevorzugt erfolgt die radikalische Polymerisation jedoch durch radikalisch initiierte wässrige Emulsionspolymerisation und durch radikalisch initiierte Lösungspolymerisation in wässrigem Medium. Dabei erfolgt die radikalisch initiierte wässrige Emulsionspolymerisation insbesondere dann, wenn das zur Polymerisation eingesetzte Monomerengemisch in solchen Mengen Monomere A2 enthält, dass sich im wässrigen Polymerisationsmedium eine separate Monomerphase ausbildet.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass die ethylenisch ungesättigten Monomeren unter Mitverwendung von Dispergierhilfsmitteln, im wässrigen Medium in Form von Monomerentröpfchen dispers verteilt und mittels eines radikalischen Polymerisationsinitiators polymerisiert werden, wobei wässrige Polymerisatdispersionen gebildet werden.

Auch die radikalisch initiierte Lösungspolymerisation ist dem Fachmann geläufig und erfolgt insbesondere in Wasser oder einem Wasser/Lösungsmittel-Gemisch (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff). Erfolgt dabei die Polymerisation in einem Wasser/Lösungsmittel-Gemisch, so wird in der Regel das organische Lösungsmittel nach Abschluss der Polymerisation zumindest teilweise, vorteilhaft zu ≥ 50 Gew.-% oder ≥ 90 Gew.-% und insbesondere vorteilhaft vollständig entfernt. Die entsprechenden Verfahren sind dem Fachmann geläufig.

Werden organische Lösungsmittel eingesetzt, so werden vorteilhaft solche Lösungsmittel ausgewählt, die bei 20 °C und Atmosphärendruck eine unbegrenzte Mischbarkeit mit Wasser, wie beispielsweise aliphatische C₁-bis C₅-Alkohole, wie insbesondere Methanol, Ethanol, n-Propanol oder Isopropanol oder aliphatische C₁-bis C₅-Ketone, wie insbesondere Aceton oder Butanon, aufweisen.
Mit besonderem Vorteil erfolgt die Polymerisationsreaktion durch radikalisch initiierte Lösungspolymerisation in einem wässrigen lösungsmittelfreien Medium, insbesondere in entionisiertem Wasser. Dabei wird die Wassermenge so gewählt dass sie ≥ 40 und ≤ 900 Gew.-%, vorteilhaft ≥ 60 und ≤ 700 Gew.-% und insbesondere vorteilhaft ≥ 80 und ≤ 500 Gew.-%, jeweils bezogen auf die Gesamtmonomerenmenge, beträgt.

Entsprechend wird in einem Polymerisationsgefäß wenigstens eine Teilmenge des Wassers und wenigstens eine Teilmenge der Saccharidverbindung B sowie gegebenenfalls eine Teilmenge der Monomeren A1 und A2 vor Initiierung der Polymerisationsreaktion vorgelegt und nach der Initiierung der Polymerisationsreaktion die gegebenenfalls verbliebenen Restmengen an Wasser, Saccharidverbindung B sowie die Gesamtmenge bzw. die gegebenenfalls verbliebene Restmenge der Monomeren A1 und A2 dem wässrigen Polymerisationsmedium unter Polymerisationsbedingungen diskontinuierlich in einer oder mehreren Portionen oder kontinuierlich mit gleichbleibenden oder sich ändernden Mengenströmen zudosiert. Mit besonderem Vorteil wird jedoch wenigstens eine Teilmenge, vorteilhaft ≥ 50 Gew.-% und insbesondere vorteilhaft ≥ 75 Gew.-% der Monomeren A1 und A2 dem wässrigen Medium unter Polymerisationsbedingungen kontinuierlich zugeführt.

Die Initiierung der radikalischen Polymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%.

Erfindungsgemäß kann die Gesamtmenge des Radikalinitiators im wässrigen Polymerisationsmedium vor Initiierung der Polymerisationsreaktion vorgelegt werden. Es ist aber auch möglich, gegebenenfalls lediglich eine Teilmenge des Radikalinitiators im wässrigen Polymerisationsmedium vor Initiierung der Polymerisationsreaktion vorzulegen und dann unter Polymerisationsbedingungen die Gesamtmenge bzw. die gegebenenfalls verbliebene Restmenge nach Maßgabe des Verbrauchs diskontinuierlich in einer oder mehreren Portionen oder kontinuierlich mit gleich bleibenden oder sich ändernden Mengenströmen zuzugeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator zum wässrigen Polymerisationsmedium unter Polymerisationsbedingungen erfolgen. Es ist aber auch möglich, dass eine Teil- oder die Gesamtmenge des Radikalinitiators dem die vorgelegte Saccharidverbindung B sowie ggf. die Monomeren A1 und A2 enthaltenden wässrigen Polymerisationsmedium unter Bedingungen, welche nicht geeignet sind eine Polymerisationsreaktion auszulösen, beispielsweise bei tiefer Temperatur, zugegeben werden und danach im wässrigen Polymerisationsmedium Polymerisationsbedingungen eingestellt werden. Unter Polymerisationsbedingungen sind dabei generell diejenigen Temperaturen und Drücke zu verstehen, unter denen die radikalisch initiierte Polymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten.

Als Reaktionstemperatur für die erfindungsgemäße radikalisch initiierten Polymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalisch initiierte Polymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Dabei kann der Druck 1,2, 1,5, 2, 5, 10, 15 bar (absolut) oder noch höhere Werte einnehmen. Wird die Polymerisationsreaktion im Unterdruck durchgeführt, werden Drücke von 950 mbar, häufig von 900 mbar und oft 850 mbar (absolut) eingestellt. Vorteilhaft wird die erfindungsgemäße radikalisch initiierte Polymerisation bei 1 atm oder bei einem höheren Druck unter Sauerstoffausschluss, beispielsweise unter Inertgasatmosphäre, wie beispielsweise unter Stickstoff oder Argon durchgeführt.

Wesentlich ist, dass bei den erfindungsgemäßen Polymerisationreaktionen, neben den vorgenannten Einsatzstoffen, noch weitere übliche Komponenten wie beispielsweise Tenside oder Schutzkolloide bei einer Emulsionspolymerisation oder sogenannte radikalkettenübertragende Verbindungen zur Steuerung des Molekulargewichts der durch die Emulsions- und bei der Lösungspolymerisation zugänglichen Polymerisate, eingesetzt werden können.

Mit besonderem Vorteil erfolgt das erfindungsgemäße Verfahren dergestalt, dass die Monomeren A1 und A2 in der ersten Verfahrensstufe bis zu einem Umsatz von ≥ 95 Gew.-%, vorteilhaft ≥ 98 Gew.-% und insbesondere vorteilhaft ≥ 99 Gew.-% umgesetzt werden. Häufig ist es vorteilhaft, wenn das nach Abschluss der Polymerisationsreaktion erhaltene wässrige Polymerisationsgemisch einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung des wässrigen Polymerisationsgemisches mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187,
DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten Monomeren A1 und A2, auch noch andere störende leichtflüchtige organischen Bestandteile (die sogenannten VOCs [volatile organic compounds]) aus dem wässrigen Polymerisationsgemisch entfernt werden.

Nach Abschluss der Polymerisationsreaktion und ggf. erfolgter Nachbehandlung kann das erhaltene wässrige Polymerisationsgemisch durch Zugabe oder Abtrennen von Wasser auf einen Feststoffgehalt ≥ 30 und ≤ 60 Gew.-% eingestellt werden.

Erfindungsgemäß wird dem in der ersten Verfahrensstufe erhaltenen Polymerisationsgemisch ≥ 0,1 und ≤ 70 Gew.-%, bevorzugt ≥ 10 und ≤ 50 Gew.-% und insbesondere bevorzugt ≥ 20 und ≤ 40 Gew.-%, jeweils bezogen auf die Gesamtmonomeren, wenigstens eines Alkanolamins C zugesetzt.

Als Alkanolamine C werden insbesondere Verbindungen der allgemeinen Formel (I) 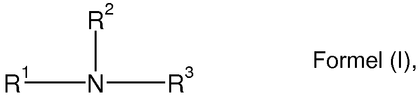 eingesetzt, in der R¹ für ein H-Atom, eine C₁-bis C₁₀-Alkylgruppe oder eine C₂-bis C₁₀-Hydroxyalkylgruppe steht und R² und R³ für eine C₂-bis C₁₀-Hydroxyalkylgruppe stehen.

Besonders bevorzugt stehen R² und R³ unabhängig voneinander für eine C₂-bis C₅-Hydroxyalkylgruppe und R¹ für ein H-Atom, eine C₁-bis C₅-Alkylgruppe oder eine C₂-bis C₅-Hydroxyalkylgruppe.

Als Alkanolamine C werden jedoch insbesondere vorteilhaft Diethanolamin, Triethanolamin, Diisopropanolamin, Triisopropanolamin, Methyldiethanolamin, Butyldiethanolamin und/oder Methyldiisopropanolamin eingesetzt, wobei Triethanolamin insbesondere bevorzugt ist.
In der Regel wird die Gesamtmenge des wenigstens einen Alkanolamins C dem in der ersten Verfahrensstufe erhaltenen wässrigen Polymerisationsgemisch bei einer Temperatur ≥ 0 und ≤ 70 °C und vorteilhaft ≥ 10 und ≤ 50 °C diskontinuierlich in einer oder mehreren Portionen oder kontinuierlich mit gleichbleibenden oder sich ändernden Mengenströmen zugesetzt und das erhaltene Gemisch homogen vermischt.

Das erfindungsgemäße wässrige Bindemittelsystem kann Phosphor enthaltende Reaktionsbeschleuniger enthalten, deren Gesamtmenge vorzugsweise ≤ 5 Gew.-%, häufig ≤ 1,0 Gew.-%, oft ≤ 0,5 Gew.-% sowie häufig ≥ 0,1 Gew.-% und oft ≥ 0,3 Gew.-%, bezogen auf die Summe der Gesamtmengen an Monomeren A1, Monomeren A2 und Alkanolaminen C (fest/fest) beträgt. Phosphor enthaltende Reaktionsbeschleuniger sind beispielsweise in EP-A 583086 und EP-A 651088 offenbart. Es handelt sich dabei insbesondere um Alkalimetallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die erfindungsgemäßen wässrigen Bindemittelsysteme enthalten jedoch vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittelsysteme können jedoch dem Fachmann geläufige Veresterungskatalysatoren enthalten, wie beispielsweise Schwefelsäure oder p-Toluolsulfonsäure bzw. Titanate oder Zirkonate.

Des Weiteren können die erfindungsgemäßen wässrigen Bindemittelsysteme auch weitere, dem Fachmann in Art und Menge geläufige optionale Hilfsstoffe, wie beispielsweise so genannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Soll ein erfindungsgemäßes wässriges Bindemittelsystem als Bindemittel für Mineralfasern und/oder Glasfasern bzw. daraus hergestellte Vliese eingesetzt werden, so wird dem wässrigen Bindemittelsystem vorteilhaft ≥ 0,001 und ≤ 5 Gew.-% und insbesondere vorteilhaft ≥ 0,05 und ≤ 2 Gew.-%, bezogen auf die Summe der Gesamtmengen an Monomeren A1, Monomeren A2 und Alkanolaminen C (fest/fest), wenigstens einer siliziumhaltigen organischen Verbindung (Haftvernetzer), beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan und/oder 3-Mercaptopropyltrimethoxysilan besonders bevorzugt sind, zugesetzt.
Die erfindungsgemäßen wässrigen Bindemittelsysteme weisen üblicherweise Feststoffgehalte (gebildet aus der Summe der Gesamtmenge an Monomeren A1, Monomeren A2, Saccharidverbindung B und Alkanolamin C als Feststoff gerechnet) von ≥ 1 und ≤ 70 Gew.-%, häufig ≥ 5 und ≤ 65 Gew.-% und oft ≥ 10 und ≤ 55 Gew.-%, jeweils bezogen auf das wässrige Bindemittelsystem, auf.

Die erfindungsgemäßen wässrigen Bindemittelsysteme weisen üblicherweise pH-Werte (gemessen bei 23 °C; mit entionisiertem Wasser auf einen Feststoffgehalt von 10 Gew.-% verdünnt) im Bereich von ≥ 1 und ≤ 10, vorteilhaft ≥ 2 und ≤ 6 und insbesondere vorteilhaft ≥ 3 und ≤ 5 auf. Dabei können zur Einstellung des pH-Wertes alle dem Fachmann geläufige basische Verbindungen eingesetzt werden. Häufig werden jedoch solche basischen Verbindungen verwendet, die bei den Temperaturen während der Trocknung bzw. Aushärtung nicht flüchtig sind, wie beispielsweise Natriumhydroxid, Kaliumhydroxid oder Natriumcarbonat.

Die vorgenannten wässrigen Bindemittelsysteme eignen sich vorteilhaft zur Herstellung von Klebstoffen, Dichtmassen, Kunststoffputzen, Papierstreichmassen, Formkörpern, Anstrichmitteln und Schlagzähmodifiern sowie zur Modifizierung von mineralischen Bindemitteln und Kunststoffen.

Die vorgenannten wässrigen Bindemittelsysteme eignen sich jedoch insbesondere vorteilhaft als Bindemittel für faserförmige und/oder körnige Substrate. Mit Vorteil lassen sich die genannten wässrigen Bindemittelsysteme daher zur Herstellung von Formkörpern aus faserförmigen und/oder körnigen Substraten einsetzen.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte (beispielsweise genadelte) oder chemisch, beispielsweise mit Melamin/Formaldehyd-Harzen oder Polyvinylalkohol vorgebundene Faservliese mit umfassen. Insbesondere vorteilhaft ist das erfindungsgemäße wässrige Bindemittelsystem als formaldehydfreies Bindemittel für die vorgenannten Fasern bzw. daraus gebildete Faservliese geeignet.

Das Verfahren zur Herstellung eines Formkörpers aus einem körnigen und/oder faserförmigen Substrat und dem erfindungsgemäßen wässrigen Bindemittelsystem erfolgt vorteilhaft dergestalt, dass das erfindungsgemäße wässrige Bindemittelsystem gleichmäßig auf die körnigen und/oder faserförmigen Substrate aufgebracht wird bzw. die körnigen und/oder faserförmigen Substrate mit dem erfindungsgemäßen wässrigen Bindemittelsystem getränkt werden, gegebenenfalls die mit dem wässrigen Bindemittelsystem behandelten körnigen und/oder faserförmigen Substrate in Form gebracht werden und die behandelten körnigen und/oder faserförmigen Substrate anschließend einem thermischen Behandlungsschritt bei einer Temperatur ≥ 110 °C unterzogen werden.

Die Behandlung (Imprägnierung) der körnigen und/oder faserförmigen Substrate mit dem erfindungsgemäßen wässrigen Bindemittelsystem erfolgt in der Regel dergestalt, dass das vorgenannte wässrige Bindemittelsystem gleichmäßig auf die Oberfläche der körnigen und/oder faserförmigen Substrate aufgebracht wird. Dabei wird die Menge an wässrigem Bindemittelsystem so gewählt, dass pro 100 g körnigem und/oder faserförmigem Substrat ≥ 0,1 g und ≤ 100 g, bevorzugt ≥ 1 g und ≤ 50 g und insbesondere bevorzugt ≥ 5 g und ≤ 30 g Bindemittel (berechnet als Summe der Gesamtmengen an Monomeren A1, Monomeren A2, Saccharidverbindungen B und Alkanolaminen C auf Feststoffbasis) eingesetzt werden. Die Imprägnierung der körnigen und/oder faserförmigen Substrate ist dem Fachmann geläufig und erfolgt beispielsweise durch Tränkung oder durch Besprühen der körnigen und/oder faserförmigen Substrate.

Nach dem Aufbringen des wässrigen Bindemittelsystems wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 110 °C, bevorzugt ≥ 20 °C und ≤ 100 °C und insbesondere bevorzugt ≥ 40 und ≤ 100 °C und die Aushärtungsstufe bei einer Temperatur ≥ 110 °C, bevorzugt ≥ 130 und ≤ 250 °C oder ≥ 160 und ≤ 220 °C und insbesondere bevorzugt ≥ 170 °C und ≤ 210 °C erfolgt.

Die Trocknungsstufe erfolgt dabei vorteilhaft dergestalt, dass bei einer Temperatur < 100 °C so lange getrocknet wird, bis das in Form gebrachte imprägnierte körnige und/oder faserförmige Substrat, welches häufig noch nicht seine endgültige Form aufweist (sogenanntes Halbzeug) eine Restfeuchte ≤ 30 Gew.-%, bevorzugt ≤ 15 Gew.-% und insbesondere bevorzugt ≤ 10 Gew.-% aufweist. Dabei wird die Restfeuchte generell bestimmt, indem ca. 1 g des erhaltenen Halbzeugs bei Raumtemperatur gewogen, dieses daran anschließend für 2 Minuten bei 110 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang bei 110 °C, bezogen auf das Gewicht des Halbzeugs vor dem Trocknungsvorgang multipliziert mit dem Faktor 100.

Das so erhaltene Halbzeug ist durch Erwärmen auf eine Temperatur bis ca. 100 °C noch verformbar (thermoplastisches Verhalten) und kann bei dieser Temperatur in die endgültige Form des gewünschten Formkörpers gebracht werden.
Die nachfolgende Aushärtungsstufe erfolgt vorteilhaft dergestalt, dass das Halbzeug bei einer Temperatur ≥ 110 °C solange erhitzt wird, bis dieses eine Restfeuchte ≤ 2 Gew.-%, bevorzugt ≤ 1 Gew.-% oder ≤ 0,5 Gew.-% und insbesondere bevorzugt ≤ 0,1 Gew.-% aufweist, wobei das Bindemittel in Folge einer chemischen Veresterungsreaktion aushärtet (duroplastisches Verhalten).

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper, insbesondere Faservliese weisen vorteilhafte Eigenschaften, insbesondere eine verbesserte Reiß- bzw. Nassreißfestigkeit im Vergleich zu den Formkörpern des Standes der Technik auf.

Die Erfindung soll anhand nachfolgender nicht einschränkender Beispiele erläutert werden.

### Beispiele

### A) Herstellung der Polymerisatsysteme

### Polymerisatsystem 1

In einem 2 I-Glaskolben, ausgerüstet mit einem Rührer und Dosiereinrichtungen wurden bei 20 bis 25 °C (Raumtemperatur) und unter Stickstoffatmosphäre 420 g entionisiertes Wasser, 127 g Maleinsäureanhydrid, 313 g einer hydrolytisch abgebauten Stärke mit einem DE-Wert von 28 (96 gew.-%ig; Maltosweet^{®} 300 der Firma Tate and Lyle GmbH) sowie 7 mg Eisen-(II)-sulfat-Heptahydrat vorgelegt und bei Atmosphärendruck unter Rühren auf 99 °C aufgeheizt. Nach Erreichen dieser Temperatur wurden gleichzeitig beginnend 803 g einer 56 gew.-%igen wässrigen Lösung von Acrylsäure innerhalb von 4 Stunden und 138 g einer 16 gew.-%igen wässrigen Lösung von Wasserstoffperoxid innerhalb von 5 Stunden kontinuierlich mit gleichbleibenden Mengenströmen und unter Rühren und Aufrechterhaltung der vorgenannten Temperatur zudosiert. Anschließend ließ man das Polymerisationsgemisch noch 2 Stunden bei vorgenannter Temperatur nachpolymerisieren und kühlte es auf Raumtemperatur ab. Die erhaltene wässrige Polymerisatlösung wies einen Feststoffgehalt von 49,5 Gew.-% auf. Die Viskosität wurde zu 602 mPas (Spindel 2, 30 Umdrehungen pro Minute [UpM]) bestimmt.

Die Feststoffgehalte wurden generell bestimmt, indem eine definierte Menge der wässrigen Polymerlösung (ca. 0,8 g) mit Hilfe des Feuchtebestimmers HR73 der Firma Mettler Toledo bei einer Temperatur von 130 °C bis zur Gewichtskonstanz getrocknet wurden (ca. 2 Stunden). Es wurden jeweils zwei Messung durchgeführt. Der jeweils angegebene Wert stellt den Mittelwert dieser Messungen dar.

Die Viskositäten wurden generell mittels eines Brookfield Viskosimeters, Modell LVF, bei 25 °C nach ISO 2555 (1989) bestimmt.

### Polymerisatsystem 2

Die Herstellung von Polymerisatsystem 2 erfolgte analog der Herstellung von Polymerisatsystem 1 mit dem Unterschied, dass 579 g anstelle von 420 g entionisiertem Wasser und 417 g einer 72 gew.-%igen wässrigen Lösung einer hydrolytisch abgebauten Stärke mit einem DE-Wert von 26 bis 32 (C*Sweet 01403 der Firma Cargill GmbH) anstelle von 313 g Maltosweet^{®} vorgelegt und 540 g einer 83 gew.-%igen wässrigen Lösung von Acrylsäure anstelle von 803 g einer 56 gew.-%igen wässrigen Lösung von Acrylsäure zudosiert wurden.

Die erhaltene wässrige Polymerisatlösung wies einen Feststoffgehalt von 50,2 Gew.-% auf. Die Viskosität wurde zu 513 mPas (Spindel 3, 30 UpM) bestimmt.

### Polymerisatsystem 3

Die Herstellung von Polymerisatsystem 3 erfolgte analog der Herstellung von Polymerisatsystem 1 mit dem Unterschied, dass 442 g anstelle von 420 g entionisiertem Wasser, 95 g anstelle von 127 g Maleinsäureanhydrid und 469 g anstelle von 313 g Maltosweet^{®} vorgelegt und 676 g einer 50 gew.-%igen anstelle von 803 g einer 56 gew.-%igen wässrigen Lösung von Acrylsäure und 120 g einer 13,8 gew.-%igen anstelle von 138 g einer 16 gew.-%igen wässrigen Lösung von Wasserstoffperoxid zudosiert wurden.

Die erhaltene wässrige Polymerisatlösung wies einen Feststoffgehalt von 50,2 Gew.-% auf. Die Viskosität wurde zu 212 mPas (Spindel 3, 60 UpM) bestimmt.

### Polymerisatsystem 4

Die Herstellung von Polymerisatsystem 4 erfolgte analog der Herstellung von Polymerisatsystem 2 mit dem Unterschied, dass 286 g anstelle von 579 g entionisiertem Wasser, 95 g anstelle von 127 g Maleinsäureanhydrid und 625 g anstelle von 417 g C*Sweet 01403 vorgelegt und 676 g einer 50 gew.-%igen anstelle von 803 g einer 56 gew.-%igen wässrigen Lösung von Acrylsäure und 120 g einer 13,8 gew.-%igen anstelle von 138 g einer 16 gew.-%igen wässrigen Lösung von Wasserstoffperoxid zudosiert wurden.

Die erhaltene wässrige Polymerisatlösung wies einen Feststoffgehalt von 49,7 Gew.-% auf. Die Viskosität wurde zu 190 mPas (Spindel 2, 60 UpM)bestimmt.

### Vergleichspolymerisat V

Als Vergleichspolymerisat V wurde eine 47 gew.-%ige wässrige Lösung eines Acrylsäure/Maleinsäure-Polymerisats (Acrylsäure/Maleinsäure im Gewichtsverhältnis 75:25) mit einem gewichtsmittleren Molekulargewicht von 87000 g/mol eingesetzt.

### B) Anwendungstechnische Untersuchungen

### Herstellung der Bindemittelflotten

Die Herstellung der Bindemittelflotten erfolgte dergestalt, dass die wässrigen Polymerisatsysteme 1 bis 4 bei Raumtemperatur durch Verdünnen mit entionisiertem Wasser auf einen Feststoffgehalt von 45 Gew.-% eingestellt wurden. Daran anschließend wurden den verdünnten wässrigen Polymerisatsystemen 1 bis 4 jeweils 100 g-Portionen entnommen und diese mit den in Tabelle 1 angegebenen Mengen an Triethanolamin unter Rühren versetzt.

Zur Herstellung der Bindemittelvergleichsflotten wurden bei Raumtemperatur zu je 500 g des Vergleichspolymerisats V 122 g oder 244 g Maltosweet^{®} 300 bzw. 163 g oder 326 g C*Sweet 01403 unter Rühren zugegeben. Durch anschließende Zugabe von entionisiertem Wasser wurden die erhaltenen Lösungen auf einen Feststoffgehalt von 45 Gew.-% eingestellt. Die entsprechend erhaltenen verdünnten Lösungen werden als Polymerisatsysteme V1 und V3 bzw. V2 und V4 bezeichnet. Daran anschließend wurden den erhaltenen Polymerisatsystemen V1 bis V4 jeweils 100 g-Portionen entnommen und diese mit den ebenfalls in Tabelle 1 angegebenen Mengen an Triethanolamin unter Rühren versetzt.

**Tabelle 1: zugesetzte Mengen an Triethanolamin und daraus resultierende Polymerisatsysteme**

| eingesetztes Polymerisatsystem [Nr.] | Menge an Triethanolamin [in g] | resultierendes Polymerisatsystem [Nr.] |
|---|---|---|
| 1 | 3,0 | 1.1 |
| 1 | 6,0 | 1.2 |
| 1 | 9,0 | 1.3 |
| 1 | 12,0 | 1.4 |
| 2 | 6,0 | 2.1 |
| 2 | 9,0 | 2.2 |
| 3 | 4,5 | 3.1 |
| 3 | 6,8 | 3.2 |
| 4 | 4,5 | 4.1 |
| 4 | 6,8 | 4.2 |
| V1 | 3,0 | V1.1 |
| V1 | 6,0 | V1.2 |
| V1 | 9,0 | V1.3 |
| V1 | 12,0 | V1.4 |
| V2 | 6,0 | V2.1 |
| V2 | 9,0 | V2.2 |
| V3 | 4,5 | V3.1 |
| V3 | 6,8 | V3.2 |
| V4 | 4,5 | V4.1 |
| V4 | 6,8 | V4.2 |

Die resultierenden Polymerisatsysteme 1.1 bis V4.2 wurden anschließend noch unter Rühren mit je 0,16 g 3-Aminopropyltriethoxysilan (Silquest^{®} A-1100^{®} Silan der Firma Momentive Performace Materials GmbH) versetzt. Daran anschließend wurden die erhaltenen Polymerisatsysteme 1.1 bis V4.2 durch Verdünnen mit entionisiertem Wasser auf einen Feststoffgehalt von 5 Gew.-% eingestellt und nachfolgend als Bindemittelflotten 1.1 bis V4.2 bezeichnet.

### Herstellung der gebundenen Faservliese

Zur Herstellung der gebundenen Faservliese wurde als Rohvlies ein Glasfaservlies (28,5 cm Länge, 27 cm Breite) mit einem Flächengewicht von 56 g/m2 der Fa. Whatman International Ltd. verwendet.

Zum Aufbringen der Bindemittelflotten (Imprägnierung) wurden die Glasfaservliese in Längsrichtung über ein Endlos-PES-Siebband mit einer Bandlaufgeschwindigkeit von 200 cm pro Minute jeweils durch die vorgenannten 5 gew.-%igen wässrigen Bindemittelflotten 1.1 bis V4.2 geleitet. Durch anschließende Absaugung der wässrigen Bindemittelflotten wurde der Nassauftrag auf 224 g/m² (entsprechend 11,2 g/m² Bindemittel als Feststoff gerechnet) eingestellt. Die so erhaltenen imprägnierten Glasfaservliese wurden in einem Mathis-Ofen auf einen Kunststoffnetz als Träger für 3 Minuten bei 180 °C bei maximalen Heißluftstrom getrocknet und ausgehärtet. Nach dem Abkühlen auf Raumtemperatur wurden Prüfstreifen mit einer Größe von 240 x 50 mm in Faserlängsrichtung zurechtgeschnitten. Die erhaltenen Prüfstreifen wurden anschließend für 24 Stunden bei 23 °C und 50 % relativer Luftfeuchtigkeit im Klimaraum gelagert. Die in Abhängigkeit von den eingesetzten Bindemittelflotten 1.1 bis V4.2 erhaltenen Glasfaservliesprüfstreifen werden im folgenden Prüfstreifen 1.1 bis V4.2 bezeichnet.

### Bestimmung der Reißkraft

Die Bestimmung der Reißkraft erfolgte bei Raumtemperatur an einer Zugprüfmaschine der Firma Zwick-Roell, Typ Z005. Die Prüfstreifen 1.1 bis V4.2 wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Die Angabe der Reißkraft erfolgt unter Normierung auf 67 g/m² in Newton pro 50 mm. Je höher die zum Riss der Prüfstreifen erforderliche Kraft ist, desto besser ist die entsprechende Reißkraft zu bewerten. Es erfolgten jeweils 5 Messungen. Die in Tabelle 2 angegebenen Werte stellen jeweils den Mittelwert dieser Messungen dar.

### Bestimmung Nassreißkraft

Zur Bestimmung der Nassreißkraft wurden die Prüfstreifen für 15 Minuten bei 80 °C in entionisiertem Wasser gelagert und danach überschüssiges Wasser mit einem Baumwollgewebe abgetupft. Die Bestimmung der Reißkraft erfolgte an einer Zugprüfmaschine der Firma Zwick-Roell, Typ Z005. Die Prüfstreifen 1.1 bis V4.2 wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 separate Messungen. Die in Tabelle 2 angegebenen Werte stellen jeweils den Mittelwert dieser Messungen dar.

**Tabelle 2: Ergebnisse der Reißkraft und der Nassreißkraft bei Raumtemperatur**

| Prüfstreifen | Reißkraft bei Raumtemperatur [in N/50 mm] | Nassreißkraft bei Raumtemperatur [in N/50 mm] |
|---|---|---|
| 1.1 | 103 | 40 |
| 1.2 | 112 | 47 |
| 1.3 | 118 | 51 |
| 1.4 | 120 | 53 |
| 2.1 | 109 | 50 |
| 2.2 | 115 | 54 |
| 3.1 | 109 | 36 |
| 3.2 | 113 | 41 |
| 4.1 | 103 | 32 |
| 4.2 | 109 | 39 |
| V1.1 | 84 | 33 |
| V1.2 | 93 | 40 |
| V1.3 | 97 | 44 |
| V1.4 | 101 | 45 |
| V2.1 | 101 | 38 |
| V2.2 | 107 | 44 |
| V3.1 | 94 | 29 |
| V3.2 | 98 | 32 |
| V4.1 | 99 | 29 |
| V4.2 | 103 | 35 |

Aus den Ergebnissen ist klar ersichtlich, dass die mit den erfindungsgemäßen Bindemittelsystemen hergestellten Faservliese eine verbesserte Reißkraft sowie eine verbesserte Nassreißkraft bei Raumtemperatur aufweisen.

## Patentansprüche

1. Verfahren zur Herstellung eines wässrigen Bindemittelsystems, **dadurch gekennzeichnet, dass** in einer ersten Verfahrensstufe
| | |
|---|---|
| ≥ 50 und ≤ 100 Gew.-Teile | wenigstens einer α,β-monoethylenisch ungesättigten Mono-oder Dicarbonsäure und/oder deren Anhydrid (Monomer A1), und |
| ≥ 0 und ≤ 50 Gew.-Teile | wenigstens einer anderen ethylenisch ungesättigten Verbindung, welche mit den Monomeren A1 copolymerisierbar ist (Monomer A2), |
wobei sich die Gesamtmengen der Monomeren A1 und A2 zu 100 Gew.-Teilen addieren [Gesamtmonomerenmenge], in einem wässrigen Medium in Anwesenheit von ≥ 0,1 und ≤ 150 Gew.-%, bezogen auf die Gesamtmonomerenmenge, wenigstens einer Saccharidverbindung B radikalisch polymerisiert werden und daran anschließend in einer zweiten Verfahrensstufe dem in der ersten Verfahrensstufe erhaltenen Polymerisationsgemisch ≥ 0,1 und ≤ 70 Gew.-%, bezogen auf die Gesamtmonomerenmenge, wenigstens eines Alkanolamins mit wenigstens zwei Hydroxygruppen (Alkanolamin C) zugesetzt wird, wobei die Saccharidverbindung B ein gewichtsmittleres Molekulargewicht ≥ 3000 und 10000 g/mol aufweist und wobei die Gesamtmenge an Saccharidverbindungen B ≥ 30 und ≤ 100 Gew.-%, bezogen auf die Gesamtmonomerenmenge, beträgt.

2. Verfahren nach Anspruch 1, **dadurch gekennzeichnet, dass** ≥ 85 und ≤ 100 Gew.-Teile wenigstens eines Monomeren A1 und ≥ 0 und ≤ 15 Gew.-Teile wenigstens eines Monomeren A2 eingesetzt werden.

3. Verfahren nach einem der Ansprüche 1 oder 2, **dadurch gekennzeichnet, dass** als Monomere A1 Acrylsäure, Methacrylsäure, Maleinsäure, Maleinsäureanhydrid und/oder Itaconsäure, und als Monomere A2 Methylacrylat, Ethylacrylat, n-Butylacrylat, 2-Ethylhexyl-acrylat, Methylmethacrylat und/oder Styrol eingesetzt werden.

4. Verfahren nach einem der Ansprüche 1 bis 3, **dadurch gekennzeichnet, dass** wenigstens eine Teilmenge der Monomeren A1 und A2 dem wässrigen Medium unter Polymerisationsbedingungen kontinuierlich zugeführt werden.

5. Verfahren nach einem der Ansprüche 1 bis 4, **dadurch gekennzeichnet, dass** wenigstens eine Teilmenge der Saccharidverbindung B im wässrigen Medium vorgelegt werden.

6. Verfahren nach einem der Ansprüche 1 bis 5, **dadurch gekennzeichnet, dass** die Gesamtmenge der Saccharidverbindung B im wässrigen Medium vorgelegt wird.

7. Verfahren nach einem der Ansprüche 1 bis 6, **dadurch gekennzeichnet, dass** als Saccharidverbindung B Stärke sowie deren Derivate und/oder Substitutionsprodukte eingesetzt werden.

8. Verfahren nach einem der Ansprüche 1 bis 7, **dadurch gekennzeichnet, dass** als Alkonolamin C Diethanolamin, Triethanolamin, Diisopropanolamin, Triisopropanolamin, Methyldiethanolamin, Butyldiethanolamin und/oder Methyldiisopropanolamin eingesetzt wird.

9. Verfahren nach einem der Ansprüche 1 bis 8, **dadurch gekennzeichnet, dass** die Gesamtmenge an Alkanolaminen C ≥ 10 und ≤ 50 Gew.-%, bezogen auf die Gesamtmonomerenmenge, beträgt.

10. Wässriges Bindemittelsystem erhältlich noch einem Verfahren gemäß einem der Ansprüche 1 bis 9.

11. Verwendung eines wässrigen Bindemittelsystems gemäß Anspruch 10, zur Herstellung von Klebstoffen, Dichtmassen, Kunststoffputzen, Papierstreichmassen, Formkörpern, Anstrichmitteln und Schlagzähmodifiern sowie zur Modifizierung von mineralischen Bindemitteln und Kunststoffen.

12. Verfahren zur Herstellung eines Formkörpers aus einem körnigen und/oder faserförmigen Substrat, **dadurch gekennzeichnet, dass** ein wässriges Bindemittelsystem gemäß Anspruch 10 auf das körnige und/oder faserförmige Substrat aufgebracht wird, gegebenenfalls das mit dem wässrigen Bindemittelsystem behandelte körnige und/oder faserförmige Substrat in Form gebracht wird und anschließend das behandelte körnige und/oder faserförmige Substrat einem thermischen Behandlungsschritt bei einer Temperatur ≥ 110 °C unterzogen wird.

13. Verfahren nach Anspruch 12, **dadurch gekennzeichnet, dass** pro 100 g körnigem und/oder faserförmigem Substrat ≥ 0,1 g und ≤ 100 g wässriges Bindemittelsystem (berechnet als Summe der Gesamtmengen an Monomeren A1, Monomeren A2, Saccharidverbindungen B und Alkanolaminen C auf Feststoffbasis) eingesetzt werden.

14. Verfahren nach Anspruch 12 oder 13, **dadurch gekennzeichnet, dass** vor dem thermischen Behandlungsschritt ein Trocknungsschritt erfolgt.

15. Formkörper erhältlich nach einem Verfahren gemäß einem der Ansprüche 12 bis 14.

## Claims

1. A process for producing an aqueous binder system, which comprises, in a first process stage, free-radically polymerizing
≥ 50 and ≤ 100 parts by weight of at least one α,β-monoethylenically unsaturated mono- or dicarboxylic acid and/or anhydride thereof (monomer A1), and
≥ 0 and ≤ 50 parts by weight of at least one other ethylenically unsaturated compound copolymerizable with monomers A1 (monomer A2),
where the total amounts of monomers A1 and A2 add up to 100 parts by weight [total amount of monomers], in an aqueous medium in the presence of ≥ 0.1 and ≤ 150% by weight, based on the total amount of monomers, of at least one saccharide compound B, and then, in a second process stage, adding to the polymerization mixture obtained in the first process stage ≥ 0.1 and ≤ 70% by weight, based on the total amount of monomers, of at least one alkanolamine having at least two hydroxyl groups (alkanolamine C), where the saccharide compound B has a weight-average molecular weight of ≥ 3000 and ≤ 10 000 g/mol where the total amount of saccharide compound B is ≥ 30 and ≤ 100% by weight, based on the total amount of monomers.

2. The process according to claim 1, wherein ≥ 85 and ≤ 100 parts by weight of at least one monomer A1 and ≥ 0 and ≤ 15 parts by weight of at least one monomer A2 are used.

3. The process according to either of claims 1 and 2, wherein the monomers A1 used are acrylic acid, methacrylic acid, maleic acid, maleic anhydride and/or itaconic acid, and the monomers A2 used are methyl acrylate, ethyl acrylate, n-butyl acrylate, 2-ethylhexyl acrylate, methyl methacrylate and/or styrene.

4. The process according to any of claims 1 to 3, wherein at least a portion of monomers A1 and A2 is supplied continuously to the aqueous medium under polymerization conditions.

5. The process according to any of claims 1 to 4, wherein at least a portion of the saccharide compound B is initially charged in the aqueous medium.

6. The process according to any of claims 1 to 5, wherein the entirety of the saccharide compound B is initially charged in the aqueous medium.

7. The process according to any of claims 1 to 6, wherein the saccharide compound B used is starch and derivatives and/or substitution products thereof.

8. The process according to any of claims 1 to 7, wherein the alkanolamine C used is diethanolamine, triethanolamine, diisopropanolamine, triisopropanol amine, methyldiethanolamine, butyldiethanolamine and/or methyldiisopropanolamine.

9. The process according to any of claims 1 to 8, wherein the total amount of alkanolamine C is ≥ 10 and ≤ 50% by weight, based on the total amount of monomers.

10. An aqueous binder system obtainable by a process according to any of claims 1 to 9.

11. The use of an aqueous binder system according to claim 10 for production of adhesives, sealants, synthetic renders, paper coating slips, shaped articles, paints and impact modifiers, and for modification of mineral binders and polymers.

12. A process for producing a shaped article from a granular and/or fibrous substrate, which comprises applying an aqueous binder system according to claim 10 to the granular and/or fibrous substrate, optionally shaping the granular and/or fibrous substrate treated with the aqueous binder system and then subjecting the treated granular and/or fibrous substrate to a thermal treatment step at a temperature of ≥ 110°C.

13. The process according to claim 12, wherein ≥ 0.1 g and ≤ 100 g of aqueous binder system (calculated as the sum of the total amounts of monomers A1, monomers A2, saccharide compounds B and alkanolamines C based on solids) are used per 100 g of granular and/or fibrous substrate.

14. The process according to claim 12 or 13, wherein the thermal treatment step is preceded by a drying step.

15. A shaped article obtainable by a process according to any of claims 12 to 14.

## Revendications

1. Procédé de fabrication d'un système liant aqueux, **caractérisé en ce que**, lors d'une première étape de procédé
≥ 50 et ≤ 100 parties en poids d'au moins un acide mono- ou dicarboxylique α,β-monoéthyléniquement insaturé et/ou son anhydride (monomère A1), et
≥ 0 et ≤ 50 parties en poids d'au moins un autre composé éthyléniquement insaturé, qui est copolymérisable avec le monomère A1 (monomère A2),
la somme des quantités totales des monomères A1 et A2 étant de 100 parties en poids [quantité de monomères totale], sont polymérisées par voie radicalaire dans un milieu aqueux en présence de ≥ 0,1 et ≤ 150 % en poids, par rapport à la quantité de monomères totale, d'au moins un composé de saccharide B, puis, lors d'une seconde étape de procédé, ≥ 0,1 et ≤ 70 % en poids, par rapport à la quantité de monomères totale, d'au moins une alcanolamine contenant au moins deux groupes hydroxy (alcanolamine C) est ajoutée au mélange de polymérisation obtenu lors de la première étape de procédé, le composé de saccharide B présentant un poids moléculaire moyen en poids ≥ 3 000 et ≤ 10 000 g/mol, et la quantité totale de composés de saccharide B étant ≥ 30 et ≤ 100 % en poids, par rapport à la quantité de monomères totale.

2. Procédé selon la revendication 1, **caractérisé en ce que** ≥ 85 et ≤ 100 parties en poids d'au moins un monomère A1 et ≥ 0 et ≤ 15 parties en poids d'au moins un monomère A2 sont utilisées.

3. Procédé selon l'une quelconque des revendications 1 ou 2, **caractérisé en ce que** l'acide acrylique, l'acide méthacrylique, l'acide maléique, l'anhydride de l'acide maléique et/ou l'acide itaconique sont utilisés en tant que monomères A1, et l'acrylate de méthyle, l'acrylate d'éthyle, l'acrylate de n-butyle, l'acrylate de 2-éthylhexyle, le méthacrylate de méthyle et/ou le styrène en tant que monomères A2.

4. Procédé selon l'une quelconque des revendications 1 à 3, **caractérisé en ce qu'**au moins une partie des monomères A1 et A2 est ajoutée en continu au milieu aqueux dans les conditions de polymérisation.

5. Procédé selon l'une quelconque des revendications 1 à 4, **caractérisé en ce qu'**au moins une partie du composé de saccharide B est chargée initialement dans le milieu aqueux.

6. Procédé selon l'une quelconque des revendications 1 à 5, **caractérisé en ce que** la totalité du composé de saccharide B est chargée initialement dans le milieu aqueux.

7. Procédé selon l'une quelconque des revendications 1 à 6, **caractérisé en ce que** l'amidon et ses dérivés et/ou produits de substitution sont utilisés en tant que composé de saccharide B.

8. Procédé selon l'une quelconque des revendications 1 à 7, **caractérisé en ce que** la diéthanolamine, la triéthanolamine, la diisopropanolamine, la triisopropanolamine, la méthyldiéthanolamine, la butyldiéthanolamine et/ou la méthyldiisopropanolamine sont utilisées en tant qu'alcanolamine C.

9. Procédé selon l'une quelconque des revendications 1 à 8, **caractérisé en ce que** la quantité totale d'alcanolamines C est ≥ 10 et ≤ 50 % en poids, par rapport à la quantité de monomères totale.

10. Système liant aqueux pouvant être obtenu par un procédé selon l'une quelconque des revendications 1 à 9.

11. Utilisation d'un système liant aqueux selon la revendication 10, pour la fabrication d'adhésifs, de matériaux d'étanchéité, d'enduits plastiques, de laits de couchage pour papier, de corps moulés, de peintures et de modificateurs de la résistance aux impacts, ainsi que pour la modification de liants minéraux et de plastiques.

12. Procédé de fabrication d'un corps moulé à partir d'un substrat granuleux et/ou fibreux, **caractérisé en ce qu'**un système liant aqueux selon la revendication 10 est appliqué sur le substrat granuleux et/ou fibreux, le substrat granuleux et/ou fibreux traité avec le système liant aqueux est éventuellement mis en forme, puis le substrat granuleux et/ou fibreux traité est soumis à une étape de traitement thermique à une température ≥ 110 °C.

13. Procédé selon la revendication 12, **caractérisé en ce que**, pour 100 g de substrat granuleux et/ou fibreux, ≥ 0,1 g et ≤ 100 g de système liant aqueux (calculé en tant que somme des quantités totales de monomères A1, monomères A2, composés de saccharide B et alcanolamines C sur la base des solides) sont utilisés.

14. Procédé selon la revendication 12 ou 13, **caractérisé en ce qu'**une étape de séchage a lieu avant l'étape de traitement thermique.

15. Corps moulé, pouvant être obtenu par un procédé selon l'une quelconque des revendications 12 à 14.
